Europäisches Patentamt

European Patent Office

Office européen des brevets

(19)

(11) Numéro de publication: **0 400 552**
**A1**

## DEMANDE DE BREVET EUROPEEN

(12)

(21) Numéro de dépôt: **90110114.7**

(22) Date de dépôt: **28.05.90**

(51) Int. Cl.⁵: **B60J 3/02**

(30) Priorité: **26.05.89 IT 5900289 U**
**22.09.89 IT 4170589**

(43) Date de publication de la demande:
**05.12.90 Bulletin 90/49**

(84) Etats contractants désignés:
**AT BE CH DE DK ES FR GB GR IT LI LU NL SE**

(71) Demandeur: **SIPI SOCIETA INTERNAZIONALE PROGETTI E INNOVAZIONI**
**50 via Fabbrica - Tione di Trento**
**Trento(IT)**

(72) Inventeur: **Luciano, Pedrina**
**50 Via Fabbrica**
**Tione Di Trento, Trento(IT)**

(74) Mandataire: **Kreutz, Karl Jürgen, Dipl.-Ing.**
**Patentanwalt Osterwaldstrasse 149**
**D-8000 München 40(DE)**

(54) **Dispositif applicable aux ailettes parasoleil des véhicules automobiles à fin d'améliorer leur capacité de protection.**

(57) L'invention a pour but d'améliorer la protection optique du conducteur d'un vehicule automobile en créant la possibilité d'obtenir und protection similtanée et stable sur la gauche, vers l'avant.

Ce but est obtenu par un dispositif applicable aux ailettes paresoleil des vehicules automobiles constitué par un support qui est rendu solidaire de l'ailette paresoleil éxistante moyennant des éléments de fixaton, caractérisé par le fait de comprorter un élément de raccord fixé par une charnière sur le bord vertical de l'élément de support, et où cet élément de raccord soutient une ailette orientable par rapport au support ainsi que sur son propre plan en tournant autour du pivot.

fig 1a

fig 1b

EP 0 400 552 A1

# DISPOSITIF APPLICABLE AUX AILETTES PARASOLEIL DES VEHICULES AUTOMOBILES A FIN D'AMEILO-RER LEUR CAPACITE DE PROTECTION

Il est important d'améliorer la protection optique du conducteur d'un véhicule automobile en créant la possibilité d'obtenir une protection simultanée et stable su la gauche, vers l'avant.

La protection totale ainsi obtenue est particulièrement utile dans le cas où le tracé sinueux de la route rendrait nécessaire le changement continu de l'orientation de l'ailette paresoleil.

L'ensemble du dispositif objet de l'invention se présente comme un élément compact, de petite épaisseur et de dimensions légèrement inférieures à la moyenne des ailettes paresoleil courantes. Pour le montage, le dispositif est muni de petites sangles de fixation passer autour de l'ailette paresoleil. Les opérations de montage et démontage peuvent etre exécutés rapidement et sans aucune modification ou détérioration de l'existant. Une fois monté, le dispositif est pratiquement invisible quand l'ailette paresoleil est rebattue, seules les sangles de fixation étant apparentes. Quand l'ailette paresoleil est baissée, le dispositif apparait en face du conducteur, qui peut l'utiliser d'un seul geste de la main.

L'invention est constituée par un éléments auto-adhésifs, crochets...

Deux autres éléments viennent s'insérer sur le support: l'un, appelé ailette coulissante, qui peut se deplacer latéralement jusqu'au milieu du parebrise, et l'autre, appelè ailette orientable, qui est fixé sur le support par l'intermédiaire d'un élément de raccord formant une charnière et permettant la rotation sur deux axes vertical et horizontal.

A son tour, l'ailette orientable peut etre constituée de deux parties, la première fixée sur la charnière ci-dessus et la deuxième sur la première de façon à permettre une rotation réciproque autor d'un axe commun passant par le bord supérieur. L'ailette orientable peut etre prolongée moyennant un élément coulissant.

A titre d'exemple non limitatif nous indiquons une réalisation pratique de l'invention.

Dans la fig. 1 on montre l'ensemble en position de fereture (A) et d'ouverture (B).

Dans les fig. 2a,b,c, on montre, vuedu haut, la juxtaposition des différents composants, dans les positions de fermeture et d'ouverture:
- le support (S)
- les ailettes coulissante (AS) et orientable (AO)
- les sangles de fixation (CQ)
- l'élément de raccord (C), la vis de serrage (V), la rondelle élastique (R) et le détail avec le positionnement des sangles de fixation.

Dans la fig 3 on montre la vue en plan et les coupes du support (S) et le détail des ressort (M) destinés à recevoir l'axe (AC) de l'élément de raccord (C).

Dans la fig. 4 on montre les vues en plan et les coupes du support semplifié (SM) pour le fonctionnement avec la seule ailette coulissante (AS).

Dans la fig. 5a,b, on montre la vue en plan et l'élément de raccord (C) avec l'axe (AC) et le percement (FA) destiné à recevoir le pivot de l'ailette orientable.

Dans la fig. 6 on montre la vue en plan et les coupes de l'ailette orientable (AO), où on indique par (AOC) la charnière supérieure qui permet la rotation de l'élément externe (AOE) par rapport à l'élément interne (AOI) qui est fixé, avec possibilité de rotation sur son plan, sur l'élément de raccord (C). La même ailette orientable (AO) peut être réalisée en une seule pièce en supprimant la charnière (AOC) et la coupure entre les parties (AOI) et (AOE), sans autres modifications. L'exetension coulissante (AO) n'est pas indiquée sur le dessin de la fig. 6.

Dans la fig. 7a,b, on montre le détail des assemblages entre l'ailette orientable (AO), le raccord (C) et le support (S), vu de devant et de derrière.

Dans la fig. 7c on montre le détail agrandi de l'assemblage entre l'ailette orientable (AO) et le raccord (C).

Dans la fig. 8 on montre la vue en plan et les coupes de l'ailette coulissante (AS) avec l'éventuelle réservation pour l'observation du rétroviseur.

Il faut rémarquer que l'ensemble des composants comporte un axe de symétrie longitudinal, ce qui permet un montage spéculaire sur la droite du véhicule.

La réalisation est prévue en PVC ou matériau similaire injecté, ou alliage léger, sans exclusion pour d'autres matériaux présentant la légèreté et la rèsistance requises, comptenu aussi de la sécurité des passagers.

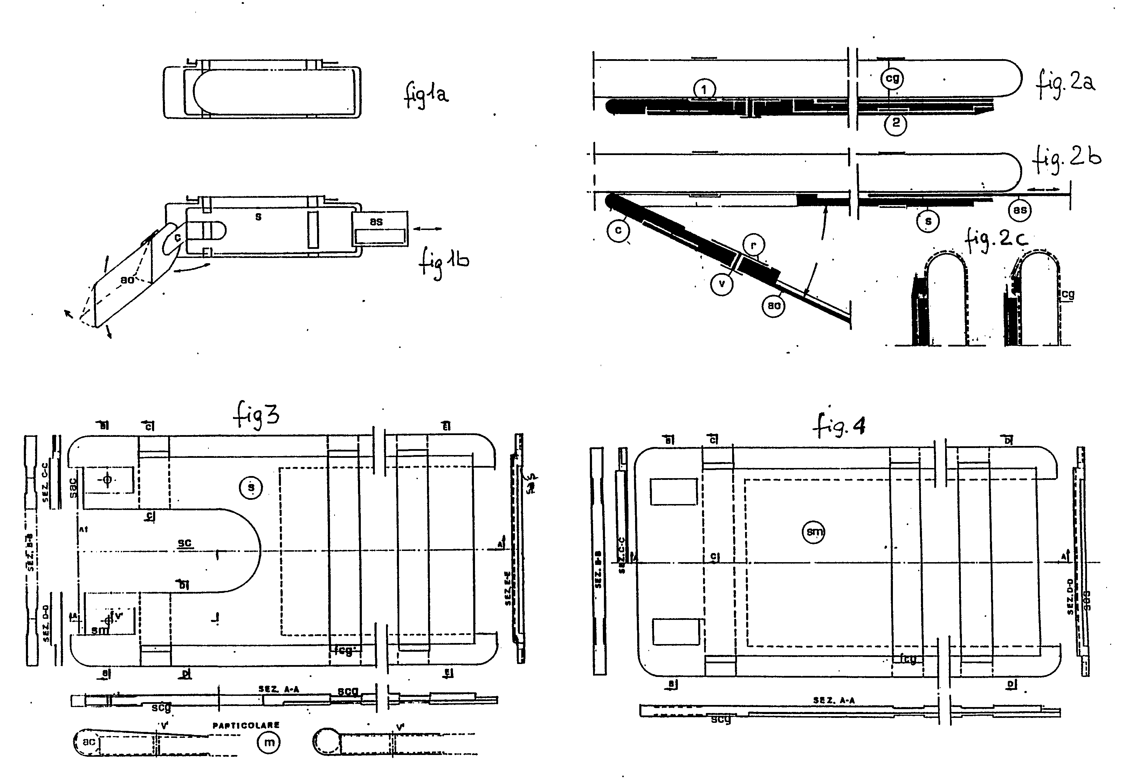

Le support (S) de petite épaisseur, comporte les sièges (SC) et (SAC) pour l'élément de raccord (C) avec son axe de rotation (AC) et l'évidement (SAS) correspondant à l'emplacement de l'ailette coulissante (AS). Les évidements (SCG) sont réservés puor le passage des sangles de fixation; le premier, en partant de gauche, est obtenu sur la surface arrière, afin de permettre la libre rotation de l'élément de raccord (C), les suivants sont obtenus sur la surface avant (vu du conducteur), afin de ne pas empecher le déplacement de l'ailette coulissante (AS). Aux extrémités des évidements (SCG) on trouve les percements (FCG) destinés au passage et à la mise en place autour de l'ailette paresoleil du véhicule des sangles de fixation, conformément au détail indiqué dans la fig. 2.

L'évidement (SAS), sont les bords peuvent être profilés en queue d'aronde délimite, avec la surface de l'ailette paresoleil le siège pour le glissement longitudinal de l'ailette (AS).

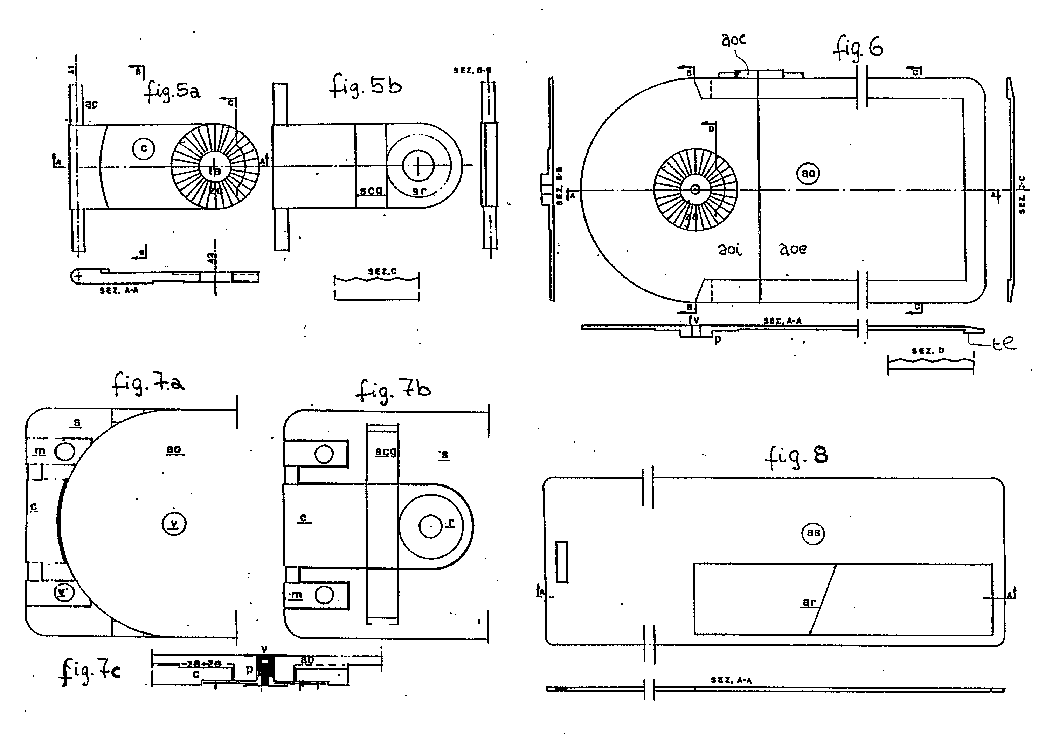

L'élément de raccord qui est indiqué dans la fig. 5 comporte notannment:

- un axe de rotation (AC) qui, en position de montage, va prendre place dans la siège (SAC) obtenu dans le bord vertical gauche du support (S).

- un corps dont les dimensions correspondent à la réservation (SC) dans le support (S).

- un percement (FA) pour le passage du pivot (P) de l'ailette orientable (AO), pour permettre la rotation de cette dernière autour de l'axe A2 perpendiculaire à son plan.

- une zone en couronne circulaire (ZC) autour du percement (FA), dont la surface présente des rainures radiales, ou d'autres systèmes de régulation et fixation.

- le sièges (sr) pour la rondelle élastique (r) et (scg) pour les sangles de fixation.

- les sièges (SR) pour la rondelle élastique (R) et (SCG) pour les sangles de fixation. En ce qui concerne l'ailette orientable (AO) une possibilité de réalisation en deux variantes est indiquée dans la fig. 6 jointe. Les dimensions et la forme correspondent en principe à celles du support (S), sauf pour l'extrémité gauche qui est semicirculaire pour permettre la rotation de l'ailette sur son plan autour de l'axe (A2). En position de fermeture, le support rentre dans la partie creuse délimitée par les nervures constituant les bords longidudinaux de l'ailette est maintenue en position de fermeture grace au frottement des talons (TL) entre les extrémités du support.

L'ailette orientable comporte, pour la variante indiquée dans la fig. 6:

- un élément interne (AOI) ayant un pivot (P) de diamètre correspondant au percement (FA) réalisé sur l'élément de raccord (C).

- un élément externe (AOE) qui peut tourner autour du pivot (AOC)

- un pivot (AOC) fixé sur le bord supérieur de l'élément (AOI)

- un trou (FV) pour le passage de la vis ou rivet de serrage (V). (détail dans fig. 7c)

- une zone en forme de couronne circulaire (ZA) autour du pivot (P). Les rainures radicales obtenues sur sa surface correspondent, en négatif, à celles de l'élément de raccord (ZC).

La deuxième variante consiste à prévoir un élément unique correspondant aux deux parties (AOI) et (AOE) réunies. Le pivot (AOC), devenu inutile, est supprimé et les autres caractéristiques restent inchangées.

La troisième variante comporte la possibilité de prolonger l'ailette orientable (AO) moyennant une partie coulissante (AO') vers l'esterieur.

En ce qui concerne l'ailette coulissante (AS) une possibilité de réalisation est indiquée dans la fig. 8 jointe. L'épaisseur et les dimensions correspondent à l'évidement (SAS) obtenu dans le support (S) ou (SM). L'ouverture (AR) est destinée à permettre l'observation du rétroviseur, dans le cas où l'ailette ne peut pas s'insérer derrière ce dernier.

On montre les possibilités de positionnement et d'assemblage des composants.

Les dispositions sont indiquées dans la fig. 1 jointe où on montre l'ailette orientable (AO) dont on peut choisir la position optimale moyennant la rotation autour de l'axe (AC) et des pivots (P) et (AOC).

L'axe (AC) du raccord (C) est serré dans les ressorts (M), dont on a indiqué les formes possibles, qui sont fixés au support moyennant les vis (V') (fig. 3). Le serrage des vis (V') permet d'obtenir le frottement nécessaire pour la maitrise du mouvement de rotation; les ressorts (M) sont réalisés en acier à haute élasticité. Les vis (V') peuvent être remplacées par des rivets. La stabilité verticale de l'ailette orientable (AO) est assurée par l'adhérence entre les parties rainurèes (ZA) et (ZC), adhérence qui est maximale quand les rainures s'entre-pénètrent; le changement de position réciproque provoque une augmentation d'épaisseur à laquelle s'oppose la réaction de la rondelle élastique (R). La vis (V') peut être remplacée par un rivet.

Le positionnement des sangles de fixation par rapport au support (S) est indiqué dans le détail correspondant dans la fig. 2 jointe.

En partant du dispositif de base, on peut concevoir une variante consistant dans une protection limitée à la partie centrale du parebrise, en utilisant exclusivement l'ailette coulissante (AS) sur le support (SM).

En plus, sur le support (S) en correspondance du bord supérieur on peut placer un pivot, fixé au toit du véhicule, qui permettrait la rotation du dispositif sur un axe horizontal correspondant à son bord supérieur où sur un axe vertical correspondant à son bord latéral. Dans ce cas le dispositif, présentant toutes les caractéristiques décrites ci-dessus, peut etre employé directement comme ailette paresoleil en remplacant celle actuellement utilisées.

Ces-ci sont les modalités schématiques suffisantes à une personne experte pour réaliser variantes sans préjudice du contenu du concept novateur.

En conséquences, en se référant à la description qui précède ainsi qu'aux dessins joints on exprime les suivantes

## Revendications

1) Dispositif applicable aux ailettes paresoleil des véhicules automobiles constitué par un support qui est rendu solidaire de l'ailette paresoleil éxistante moyennant des éléments de fixation, caractérisé par le fait de comporter un élément de raccord fixé par une charnière sur le bord vertical de l'élément de support, et où cet élément de raccord soutient une ailette orientable par rapport au support ainsi que sur son propre plan en tuornant autour du pivot.

2) Dispositif applicable aux ailettes paresoleil dei véhicules automobiles selon les revendications 1 caractérisé par le fait que des dispositifs particoliers sont prevus autour du pivot servant à la fixations de l'ailette orientable sur le support.

3) Dispositif applicable aux ailettes paresoleil des véhicules automobiles selon les revendications 1, 2, caractérisé par le fait que l'élément de support est pourvu de percements et cannelures pour le passage des sangles pour la fixation sur l'ailette paresoleil.

4) Dispositif applicable aux ailettes paresoleil des véhicules automobiles selon les revendications 1 caractérisé par le fait que l'ailette orientable peut etre réalisée en deux parties, un élément interne et un élément externe, et où l'élément externe peut tourner par rapport à l'élément interne moyennant un charnière avec axe de rotation parallèle à l'axe longitudinal de l'ailette orientable.

6) Dispositif applicable aux ailettes paresoleil des véhicules automobiles selon les revendications 1,2,3,4,5, caractérisé par le fait que l'element externe de l'ailette orientable est pourvu des guides le long desquels se déplace un élément coulissant permettant d'augmenter la longueur d'ombre de l'ailette orientable.

fig. 2a

fig. 2b

fig. 2c

fig. 4

fig. 1a

fig. 1b

fig. 3

fig.5a

fig.5b

SEZ. B-B

ac

C

A

B

C

A1

A2

B

SEZ. A-A

scg

sr

SEZ.C

aoc

fig. 6

ci

D

A

80

SEZ. B-B

A1

SEZ. C-C

aoi

aoe

B

ci

SEZ. A-A

fV

p

SEZ. D

te

fig. 7a

fig. 7b

s

80

m

c

v

v'

scg

s

c

r

m

fig. 8

8S

A

ar

A1

fig. 7c

za÷ze

c

p

v

80

SEZ. A-A

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-2517872 (R.HAMEL)<br>* colonne 2, lignes 17 - 45; figures 2-3 *<br>--- | 1-2 | B60J3/02 |
| A | US-A-3499679 (K.OLANDER)<br>* colonne 3, lignes 18 - 36; figures 6-7 *<br>--- | 1, 2 | |
| A | DE-A-3429325 (C.SENDLMAIER)<br>* page 8, lignes 1 - 9; figures 1-4 *<br>--- | 1, 3 | |
| A | FR-A-1059898 (W.SOLMES)<br>* page 3, colonne de gauche, ligne 14 - colonne de droite, ligne 7; figure 1 *<br>----- | 1 | |

**DOMAINES TECHNIQUES RECHERCHES (Int. Cl.5 )**

B60J

Le présent rapport a été établi pour toutes les revendications

| Lieu de la recherche | Date d'achèvement de la recherche | Examinateur |
|---|---|---|
| LA HAYE | 16 JUILLET 1990 | LINTZ C.H. |